# EUROPEAN PATENT APPLICATION

(11) **EP 2 603 032 A1**
(43) Date of publication of application: **12.06.2013**
(21) Application number: 12153253.5
(22) Date of filing: 31.01.2012
(51) Int. Cl.: H04W 28/06

(54) **Method of performing Internet Protocol fragmentation and related wireless network system**

(30) Priority: 08.12.2011 TW 100145249
(71) Applicant: Acer Incorporated, New Taipei City 221 (TW)
(72) Inventor: Cheng, Tsung-Yo, 221 New Taipei City (TW)
(74) Representative: Becker Kurig Straus

(57) **Abstract**

A wireless network system includes a transmitting end and a receiving end which adopt a specific communication protocol for data transmission. At the transmitting end, a plurality of data packets are merged into a data packet string, which is then segmented into a plurality of sub data packets according to a maximum transmission unit of the specific communication protocol. The plurality of sub data packets are then transmitted to the receiving end for packet reassembly.

## Description

### Field of the Invention

The present invention is related to a method of performing Internet Protocol (IP) fragmentation and related wireless network system according to the pre-characterizing clause of claim 1 and claim 5.

### Background of the Invention

Various network applications become increasingly more widespread with rapid development in technology. Electronic devices, including desktop computers, notebook computers, personal digital assistants (PDAs) or smart phones, may be used for accessing the Internet. In a wireless network system, various communication protocols may be adopted for data intercommunication between a transmitting end and a receiving end. To ensure the accuracy of data transmission, the maximum size of each transmitted data packet should not exceed the maximum transmission unit (MTU) of the adopted communication protocol.

### Summary of the Invention

This in mind, the present invention aims at providing a method of performing IP fragmentation and related wireless network system without lowering the overall utilization percentage of the transmission unit.

This is achieved by a method of performing IP fragmentation in a wireless network system according to claim 1 and a wireless network system which performs IP fragmentation according to claim 5. The dependent claims pertain to corresponding further developments and improvements.

As will be seen more clearly from the detailed description following below, the claimed method of performing IP fragmentation in a wireless network system includes providing a data packet string by merging a plurality of data packets at a transmitting end of the wireless network system; segmenting the data packet string into a plurality of sub data packets according to a maximum transmission unit of a communication protocol adopted by the wireless network system; and transmitting the plurality of sub data packets from the transmitting end of the wireless network system to a receiving end of the wireless network system.

As will be seen more clearly from the detailed description following below, the claimed wireless network system which performs IP fragmentation includes a transmitting end and a receiving end. The transmitting end includes a merging unit configured to merge a plurality of data packets into a data packet string; and a segmenting unit configured to segment the data packet string into a plurality of sub data packets according to a maximum transmission unit of a communication protocol adopted by the wireless network system. The receiving end includes a reassembling unit configured to reassemble the plurality of sub data packets received from the transmitting end.

### Brief Description of the Drawings

In the following, the invention is further illustrated by way of example, taking reference to the accompanying drawings. Thereof
FIG. 1 is a function diagram of a prior art wireless network system;
FIG. 2 is a diagram illustrating the prior art wireless network system during data transmission using a specific communication protocol;
FIG. 3 is a function diagram of a wireless network system according to the present invention; and
FIG. 4 is a diagram illustrating the wireless network system during data transmission using a specific communication protocol.

### Detailed Description

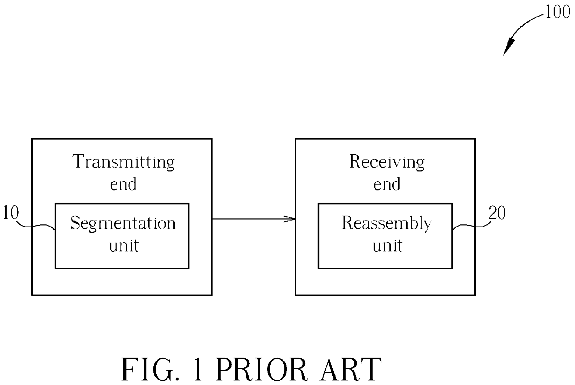

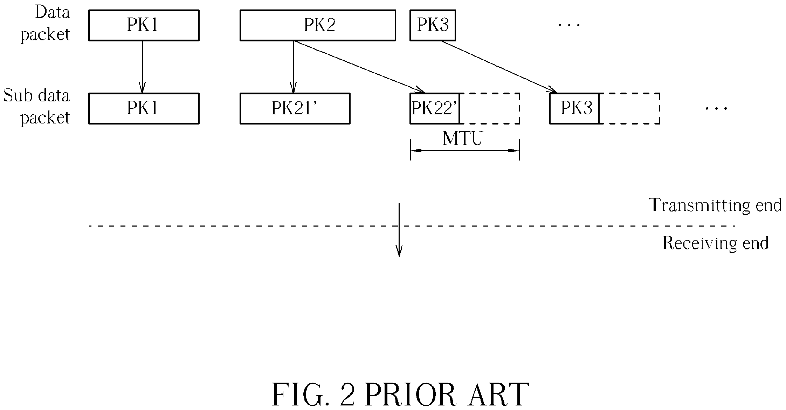

FIG. 1 is a function diagram of a prior art wireless network system 100. FIG. 2 is a diagram illustrating the prior art wireless network system 100 during data transmission using a specific communication protocol. The transmitting end of the wireless network system 100 includes a segmentation unit 10. The receiving end of the wireless network system 100 includes a reassembly unit 20. PK1-PK3 represent data packets of varying sizes.

If the size of the data packet PK1 is equal to the maximum transmission unit MTU of the specific communication protocol, the data packet PK1 may be transmitted directly from the transmitting end to the receiving end with 100% utilization percentage of the transmission unit.

If the size of the data packet PK2 is larger than the maximum transmission unit MTU of the specific communication protocol, the prior art segmentation unit 10 is configured to perform IP segmentation on the data packet PK2 so that two smaller sub data packets PK21' and PK22' may be transmitted from the transmitting end to the receiving end. In other words, the data packet PK2 requires two transmissions and the utilization percentage of the transmission unit may not be 100% when transmitting the sub data packet PK22'.

If the size of the data packet PK3 is smaller than the maximum transmission unit MTU of the specific communication protocol, the data packet PK3 may be transmitted directly from the transmitting end to the receiving end, but the utilization percentage of the transmission unit may not be 100%.

In the prior art, if the segmentation unit 10 of the transmitting end performs IP fragmentation too often, the reassembly unit 20 of the receiving end needs to spend more resources for reassembling the sub data packets. Meanwhile, the utilization percentage of the transmission unit may not be 100% if the size of the data packet being transmitted is not equal to the maximum transmission unit of the specific communication protocol, thereby wasting network resources.

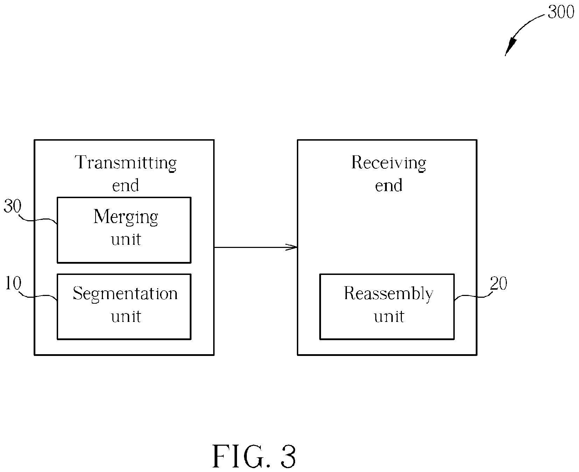

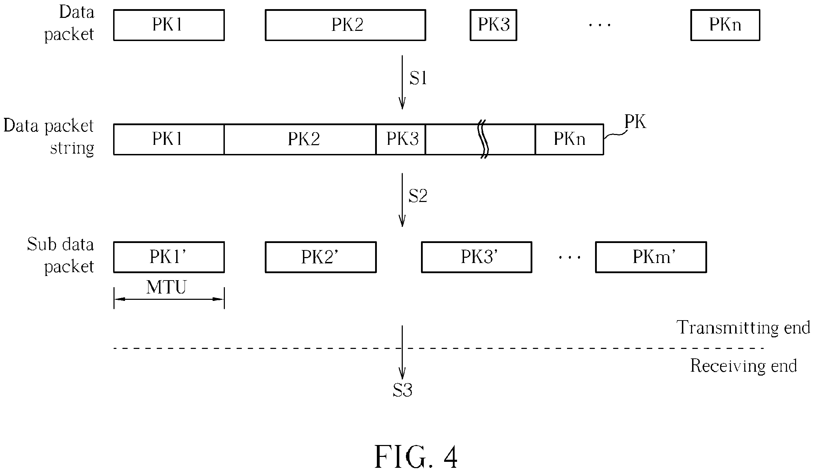

FIG. 3 is a function diagram of a wireless network system 200 according to the present invention. FIG. 4 is a diagram illustrating the wireless network system 200 during data transmission using a specific communication protocol. In an embodiment of the present invention, the wireless network system 200 may operate according to a multi-layered OSI (open system interconnection) structure. From bottom to top, Layer 1-Layer 7 sequentially include physical layer, data link layer, network layer, transport layer, session layer, presentation layer, and application layer. The wireless network system 200 includes a transmitting end and a receiving end which may be two different layers of the same user equipment (UE), two different layers of the same base station (BS), or a specific layer of a user equipment and a specific layer of a base station, respectively.

In the wireless network system 200, the transmitting end and the receiving end may adopt Ethernet protocol, Token-Ring protocol, fiber distributed data interface (FDDI) protocol, transmission control protocol (TCP), or user datagram protocol (UDP).

In the present invention, the transmitting end of the wireless network system 200 includes a segmentation unit 10 and a merging unit 30. The receiving end of the wireless network system 200 includes a reassembly unit 20. PK1-PKn represent data packets of varying sizes, such as application packets, protocol packets or QoS (quality of service) packets.

As depicted in FIG. 4, even if the sizes of the data packets PK1-PKn may be smaller than, equal to or larger than the maximum transmission unit MTU of the specific communication protocol, the merging unit 30 is configured to merge the data packets PK1-PKn into a data packet string PK (represented by an arrow S1). The segmentation unit 10 is then configured to provide a plurality of sub data packets PK1'-PKm' by performing IP segmentation on the data packet string PK (represented by an arrow S2). The reassembly unit 20 may perform data reconstruction at the receiving end (represented by an arrow S3).

The present invention may increase the utilization percentage of the transmission unit. If the size of the data packet string PK is equal to an integral multiple of the maximum transmission unit MTU, the sub data packets PK1'-PKm' each having a size equal to the maximum transmission unit MTU may be transmitted with 100% utilization percentage of the transmission unit. If the size of the data packet string PK is not equal to an integral multiple of the maximum transmission unit MTU, only the sub data packet PKm' is smaller than the maximum transmission unit MTU. Therefore, other sub data packets may be transmitted with 100% utilization percentage of the transmission unit, thereby increasing the overall utilization percentage of the transmission unit.

In conclusion, the present invention may perform IP fragmentation without lowering the overall utilization percentage of the transmission unit. Therefore, the wireless network system may transmit data more efficiently.

## Claims

1. A method of performing Internet Protocol (IP) fragmentation in a wireless network system, **characterized by**:
providing a data packet string by merging a plurality of data packets at a transmitting end of the wireless network system;
segmenting the data packet string into a plurality of sub data packets according to a maximum transmission unit of a communication protocol adopted by the wireless network system; and
transmitting the plurality of sub data packets from the transmitting end of the wireless network system to a receiving end of the wireless network system.

2. The method of claim 1, further **characterized by**:
reassembling the plurality of sub data packets at the receiving end of the wireless network system.

3. The method of claim 1, further **characterized in that** a size of each sub data packet does not exceed the maximum transmission unit.

4. The method of claim 1, further **characterized in that** the plurality of sub data packets are equal in size.

5. A wireless network system (300) which performs IP fragmentation, **characterized by**:
a transmitting end, comprising:
a merging unit (30) configured to merge a plurality of data packets into a data packet string; and
a segmenting unit (10) configured to segment the data packet string into a plurality of sub data packets according to a maximum transmission unit of a communication protocol adopted by the wireless network system (300); and
a receiving end, comprising:
a reassembling unit (20) configured to reassemble the plurality of sub data packets received from the transmitting end.
